(19) Europäisches Patentamt
European Patent Office
Office européen des brevets

(11) **EP 1 239 274 B1**

(12) **FASCICULE DE BREVET EUROPEEN**

(45) Date de publication et mention
de la délivrance du brevet:
**23.01.2008 Bulletin 2008/04**

(51) Int Cl.:
***G01L 3/10*** *(2006.01)*        ***G01L 5/22*** *(2006.01)*

(21) Numéro de dépôt: **02290541.8**

(22) Date de dépôt: **05.03.2002**

(54) **Dispositif de mesure analogique d'un couple de torsion, colonne de direction et module le comprenant**

Vorrichtung zur analogen Messung des Drehmomentes, Lenksäule und diese Vorrichtung beinhaltendes Modul

Analog torque measuring device, steering column and module incorporating this device

(84) Etats contractants désignés:
**AT BE CH CY DE DK ES FI FR GB GR IE IT LI LU MC NL PT SE TR**

(30) Priorité: **09.03.2001 FR 0103256**

(43) Date de publication de la demande:
**11.09.2002 Bulletin 2002/37**

(73) Titulaire: **SNR ROULEMENTS**
**F-74010 Annecy Cedex (FR)**

(72) Inventeur: **Desbiolles, Pascale**
**74570 Thorens-Glieres (FR)**

(74) Mandataire: **Broydé, Marc et al**
**BREDEMA**
**38, avenue de l'Opéra**
**75002 Paris (FR)**

(56) Documents cités:
**EP-A- 0 284 508          WO-A-00/62020**
**US-A- 5 955 878**

**Description**

L'invention concerne un dispositif de mesure du couple de torsion appliqué à un arbre tournant, un procédé pour mesurer le couple au moyen d'un tel dispositif, une colonne de direction ainsi qu'un module comprenant un tel dispositif.

Elle vise par exemple la mesure du couple de torsion appliqué sur une colonne de direction d'un véhicule par l'intermédiaire du volant de direction.

Par colonne de direction, l'on désigne conventionnellement un élément tubulaire, fixé à la carrosserie du véhicule, sous le tableau de bord, qui guide et supporte l'arbre de transmission relié au volant de direction.

Ce volant de direction est alors un organe de commande manuelle, relié aux roues directrices et utilisé par le conducteur pour diriger le véhicule.

L'invention concerne également les colonnes de direction découplées. Contrairement aux colonnes de direction conventionnelles, les colonnes de direction découplées ne sont pas associées à un boîtier de direction transformant le mouvement circulaire du volant de direction en déplacement angulaire de la bielle pendante qui provoque le braquage de roues.

Tout au contraire, il n'y a pas, pour ces directions découplées, de liaison mécanique directe entre le volant et les roues reposant sur le sol, que le véhicule soit réel ou appartienne à un système de simulation.

Cette simulation peut être d'objet ludique, liée à un apprentissage dans les auto-écoles ou bien encore liée à une simulation de conduite interactive pour les besoins de constructeurs automobiles.

Dans de tels simulateurs, la restitution d'efforts au niveau du volant grâce à un mécanisme générant un couple résistant sur le volant en fonction du type de véhicule à simuler, équipé ou non d'une direction assistée, doit tenir compte des conditions de roulage à recréer.

La mesure du couple appliquée au volant est par conséquent essentielle pour assurer une bonne simulation, en temps réel.

La mesure de couple sur l'arbre du volant de direction est également très importante dans les servodirections ou directions assistées.

En effet, le déclenchement de l'assistance dépend notamment du couple appliqué par le conducteur sur le volant.

Le dispositif de mesure de couple de torsion utilisé dans les servodirections émet un signal indicatif du couple de braquage exercé par le conducteur sur le volant et donc sur l'arbre de transmission de la colonne de direction du véhicule.

Ce signal est conventionnellement adressé à un calculateur d'assistance de direction qui déclenche l'assistance, en commandant par exemple un moteur électrique, dans le cas d'une servodirection électrique.

L'invention peut également s'appliquer à d'autres domaines comme celui de la transmission d'efforts, par exemple aux roues d'un véhicule, ou au contrôle du freinage dudit véhicule au moyen de la mesure du couple appliqué.

On connaît déjà des dispositifs de mesure du couple de torsion qui utilisent des jauges de contraintes collées sur un corps d'épreuve.

Ce type de technologie présente l'inconvénient de nécessiter un passage tournant qui, pour des raisons d'encombrement et de fiabilité, n'est pas souhaitable notamment pour la mesure du couple appliqué sur une colonne de direction d'un véhicule.

On connaît également d'autres technologies dans lesquelles on mesure l'angle de déformation d'un corps d'épreuve, par exemple par l'intermédiaire d'une variation d'un couplage magnétique ou d'une caractéristique du matériau mis sous tension, ou encore par mesure de deux angles d'entrée et de sortie de la barre de torsion.

Par exemple, la détection du décalage angulaire de deux générateurs de champ magnétique par rapport à des organes détecteurs permet de délivrer un signal analogique proportionnel au couple appliqué.

Ce type de technologie magnétique analogique présente un certain nombre d'inconvénients, en particulier liés au contrôle permanent de l'entrefer sur un tour afin de conserver la précision de mesure et à la compensation en température du signal de sortie qui nécessite un système de mesure différentielle.

Ainsi, dans le cadre des dispositifs analogiques de mesure de couple de l'art antérieur, le contrôle de l'entrefer et des dérives en température complique le montage du fait de l'obligation d'utiliser une mécanique plus encombrante.

Par ailleurs, le document EP-0 284 508 décrit un dispositif de mesure de couple qui utilise deux codeurs magnétiques associés respectivement au voisinage de chaque extrémité d'une barre de torsion. Dans ce dispositif, les signaux du premier codeur sont détectés par une paire de capteurs tandis que les signaux du deuxième codeur sont détectés par un capteur. Les signaux ainsi obtenus sont traités par un microprocesseur de sorte à obtenir le couple appliqué.

Pour s'affranchir des variations d'entrefer, ce document propose l'utilisation d'un filtre passe haut mais cette solution ne donne pas entièrement satisfaction car, en éliminant que les signaux de basses fréquences, elle ne présente pas une efficacité suffisante.

En outre, le dispositif décrit dans le document EP-0 284 508, en effectuant une différence temporelle des signaux détectés, ne permet pas d'obtenir le couple appliqué lorsque la vitesse de rotation est nulle.

L'invention vise donc à remédier à ces inconvénients en proposant notamment un dispositif de mesure du couple de torsion appliqué à un arbre tournant dont le signal de sortie peut être rendu indépendant d'une part de l'amplitude du champ magnétique lu et donc des variations d'entrefer et d'autre part de la décroissance du champ magnétique due à la température, tout en étant fiable et adapté à un environnement sévère de type automobile.

Ainsi, il permet de travailler dans une grande plage d'entrefer et évite une mesure différentielle pour compenser les dérives en températures.

A cet effet, et selon un premier aspect, l'invention propose un dispositif de mesure du couple de torsion appliqué à un arbre tournant, notamment à une colonne de direction d'un véhicule, ledit dispositif comprenant un corps d'épreuve déformable en torsion sous l'action du couple appliqué sur ledit arbre ainsi qu'un premier et un deuxième moyen générateur d'impulsions magnétiques, dans lequel :

- le premier moyen est associé au corps d'épreuve au voisinage d'une première extrémité de celui-ci ;
- le deuxième moyen est associé au corps d'épreuve au voisinage d'une deuxième extrémité de celui-ci ;
- un premier capteur magnétique analogique fixe par rapport à l'arbre tournant est disposé en regard et à distance d'entrefer du premier moyen, ledit capteur étant apte à délivrer un signal analogique S1 et un signal analogique C1 en quadrature ;
- un deuxième capteur magnétique analogique fixe par rapport à l'arbre tournant est disposé en regard et à distance d'entrefer du deuxième moyen, ledit capteur étant apte à délivrer un signal analogique S2 et un signal analogique C2 en quadrature ;

ledit dispositif comprenant en outre :

- un dispositif électronique de traitement apte, à partir de signaux analogiques d'entrée A, B, C, D qui sont fonctions des signaux S1, C1, S2 et C2, à former le signal de sortie $F(A, B, C, D) = ((B*C) - (A*D)) / ((B*D) + (A*C))$ qui est fonction du couple exercé sur ledit arbre.

Selon un deuxième aspect, l'invention propose un procédé pour mesurer le couple au moyen d'un dispositif de mesure décrit ci-dessus, ledit procédé comprenant les étapes de :

- mesure des signaux analogiques S1, C1, S2 et C2 ;
- égalisation de l'amplitude des signaux S1, C1 et de celle des signaux S2, C2 ;
- formation du signal F(S1, C1, S2, C2).

Selon un troisième aspect, l'invention propose un procédé pour mesurer le couple au moyen d'un dispositif de mesure décrit ci-dessus, ledit procédé comprenant les étapes de :

- mesure des signaux analogiques S1, C1, S2 et C2 ;
- égalisation de l'amplitude des signaux S1, C1 et de celle des signaux S2, C2 ;
- application d'un gain G sur les signaux S1 et C1 ou S2 et C2
- formation des signaux $S'N = SN + GCN$ et $C'N = GSN + CN$, avec N=1 ou 2 ;
- formation du signal de sortie F(S'1, C'1, S1, S2) ou F(S1, C1, S'2, C'2).

Selon un quatrième aspect, l'invention propose une colonne de direction comprenant un dispositif de mesure de couple de torsion décrit ci-dessus, dans laquelle le corps d'épreuve est intégré à la colonne.

Selon un cinquième aspect, l'invention propose un module de mesure du couple de torsion appliqué à un arbre tournant, ledit module comprenant un dispositif décrit ci-dessus et des moyens d'association dudit module avec respectivement deux parties de l'arbre, ledit arbre étant dépourvu de corps d'épreuve.

Selon un sixième aspect, l'invention propose un module de mesure du couple de torsion appliqué à un arbre tournant, ledit module comprenant un dispositif décrit ci-dessus et des moyens d'association dudit module avec respectivement une extrémité de l'arbre et l'organe appliquant le couple, ledit arbre étant dépourvu de corps d'épreuve..

D'autres objets et avantages de l'invention apparaîtront au cours de la description qui suit, faite en référence aux dessins annexés, dans lesquels :

- la figure 1 est un schéma fonctionnel d'un dispositif de mesure du couple de torsion appliqué à un arbre tournant suivant l'invention ;

- la figure 2 est une vue partielle et en coupe longitudinale d'une colonne de direction intégrant un dispositif de mesure du couple de torsion qui lui est appliqué ;

- la figure 3 est une vue partielle et en coupe longitudinale d'un module de mesure de couple de torsion appliqué à un arbre tournant.

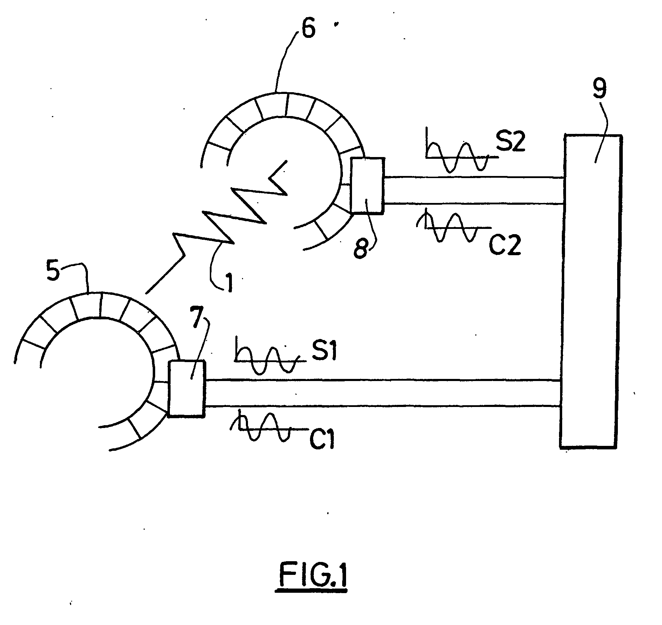

Sur les figures 1 à 3 est représenté un dispositif de mesure du couple de torsion appliqué à un arbre tournant du type comprenant un corps d'épreuve 1 déformable en torsion sous l'action du couple appliqué sur ledit arbre.

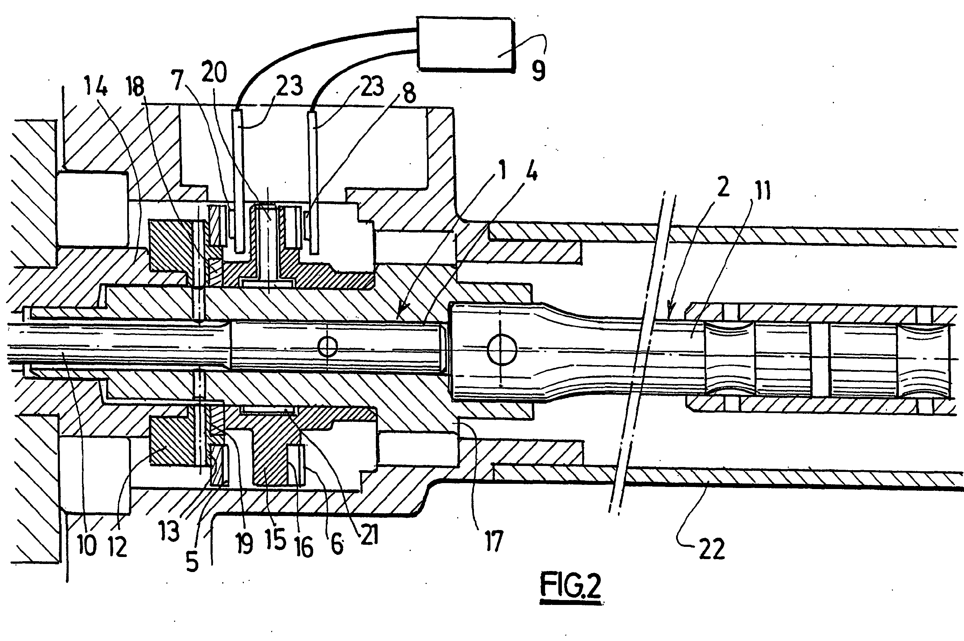

Dans un exemple particulier (voir figure 2), l'arbre tournant est une colonne de direction 2 d'un véhicule sur laquelle un couple de braquage est exercé par le conducteur à l'aide du volant de direction.

Lorsque l'on veut connaître ce couple de braquage, il est connu de prévoir un corps d'épreuve 1 apte à transmettre le couple appliqué en se déformant élastiquement sous l'action dudit couple.

La mesure du couple exercé peut alors être adressée, notamment sous la forme d'un signal électrique, à un calculateur d'assistance de direction qui déclenche l'assistance, par exemple par l'intermédiaire d'un moteur électrique dans le cas d'une servodirection électrique.

Le corps d'épreuve 1 se présente typiquement sous la forme d'une barre de torsion de diamètre amoindri par rapport à celui de l'arbre car, en élasticité linéaire isotrope, le couple exercé en torsion pure sur une barre cylindrique pleine de section circulaire varie pour un matériau donné, en fonction de la puissance quatrième du diamètre de la barre, à angle de torsion fixé.

Par conséquent, le fait de réaliser une zone de section réduite permet, sous l'effet du couple appliqué, de concentrer et d'amplifier les déformations en torsion sur ladite zone de sorte à en faire une zone de mesure privilégiée pour la valeur du couple.

Dans les modes de réalisation représentés sur les figures, la barre de torsion 1, disposée coaxialement à l'arbre, est de section cylindrique. Toutefois, en fonction des contraintes d'utilisation, la disposition de la barre de torsion 1 et/ou la géométrie de sa section peuvent être prévues différemment.

Le corps d'épreuve 1 présente une première 3 et une deuxième 4 extrémité qui, sous l'effet du couple appliqué sur l'arbre, se déplacent en rotation conjointement à l'arbre mais avec un décalage angulaire de l'une par rapport à l'autre.

On souhaite mesurer ce décalage angulaire afin de calculer, par des moyens électroniques prenant en compte la nature du corps d'épreuve 1, le couple appliqué sur l'arbre.

A cet effet, on utilise un dispositif comprenant un premier 5 et un deuxième 6 moyen générateur d'impulsions magnétiques ou codeurs qui sont prévus aux voisinages respectifs de la première 3 et de la deuxième 4 extrémité du corps d'épreuve 1.

Dans un exemple de réalisation (voir figure 1), les moyens générateurs d'impulsions 5, 6 sont formés respectivement d'un anneau multipolaire en matériau synthétique chargé de particules de ferrite formé d'une pluralité de domaines contigus à direction d'aimantation inversée d'un domaine donné par rapport aux deux domaines qui lui sont contigus.

Le dispositif comprend en outre :

- un premier capteur magnétique analogique 7 fixe par rapport à l'arbre tournant qui est disposé en regard et à distance d'entrefer du premier codeur 5 ;
- un deuxième capteur magnétique analogique 8 fixe par rapport à l'arbre tournant qui est disposé en regard et à distance d'entrefer du deuxième codeur 6 ; et
- un dispositif électronique de traitement 9 des signaux issus desdits capteurs 7, 8.

Le dispositif de traitement 9 peut être intégré dans un calculateur de commande d'au moins une fonction du véhicule, par exemple de direction assistée électrique ou de contrôle de trajectoire.

Les capteurs 7, 8 comprennent par exemple au moins deux éléments sensibles ou une barrette d'éléments sensibles choisis parmi les sondes à effet Hall, les magnétorésistances, les magnétorésistances géantes, lesdits éléments sensibles étant placés à distance d'entrefer du moyen générateur d'impulsions magnétiques 5, 6.

De façon connue, les capteurs 7, 8 sont aptes à délivrer chacun un signal analogique S1 et un signal analogique C1 en quadrature, par exemple les capteurs peuvent comprendre soit deux éléments sensibles écartés angulairement par un intervalle de n + 0,5n (n étant la longueur d'un aimant) (voir FR-2 599 794), soit une pluralité d'éléments sensibles alignés tel que décrit dans la demande FR-2 792 403. Les capteurs 7, 8 peuvent également être aptes à mesurer les composantes normales et tangentielles du champ délivré.

Les capteurs 7, 8 étant disposés à une distance suffisante des moyens générateurs d'impulsions magnétiques 5, 6, on peut considérer que les signaux délivrés sont de forme sinusoïdale, de même amplitude, centrés sur la même valeur moyenne et en quadrature l'un par rapport à l'autre. De plus, ils ont une période fonction du nombre N de paire de pôle, soit $2\pi/N$ mécaniques.

Le dispositif électronique de traitement 9 peut être prévu pour, à partir de ces signaux, et de façon connue par exemple du document FR-2 769 087, délivrer la position relative ou absolue d'au moins un des codeurs 5, 6 et donc de l'arbre associé, par rapport à une structure fixe.

En variante, un interpolateur augmentant la résolution des signaux de sortie angulaire, tel que celui décrit dans le document FR-A-2 754 063, peut être utilisé.

La valeur de cette position, notamment dans le cas où elle est absolue, peut alors être utilisée, seule ou en combinaison avec la mesure du couple appliqué, dans un système de sécurité d'un véhicule, tel qu'un système anti-patinage, anti-blocage, anti-roulis ou encore un système d'aide à la navigation.

On décrit ci-dessous deux modes de traitement des signaux dans le dispositif électronique 9.

Dans un premier mode de traitement, et dans le cas où les codeurs 5, 6 sont parfaitement indexés l'un par rapport à l'autre, c'est à dire que sous couple nul les signaux S1 et S2, respectivement C1 et C2, sont en phase, les signaux s'écrivent :

$$S1 = A1s(\theta)*\sin(\theta) ;$$

$$C1 = A1c(\theta)*\cos(\theta) ;$$

$$S2 = A2s(\theta)*\sin(\theta+\delta) ;$$

$$C2 = A2c(\theta)*\cos(\theta+\delta).$$

Où $\delta$ correspond au déphasage lié à l'angle de torsion de la barre et A1s($\theta$), A1c($\theta$), A2s($\theta$), A2c($\theta$) sont les amplitudes respectives des signaux.

Les amplitudes A1s($\theta$), A1c($\theta$), A2s($\theta$), A2c($\theta$) dépendent de la longueur polaire vue, c'est-à-dire de la tolérance de placement des capteurs 7, 8 face aux codeurs 5, 6.

Préalablement au traitement des signaux, on égalise l'amplitude des signaux S1, C1 et celle des signaux S2, C2, par exemple par programmation in situ de type EEPROM, ZENER ZAPPING ou équivalent ce qui permet d'ajuster au mieux les amplitudes après le placement des capteurs 7, 8.

Dans le cas où l'entrefer varie sur un tour à cause des défauts du matériau ou de la planéité des codeurs 5, 6, les amplitudes A1s($\theta$), A1c($\theta$), A2s($\theta$) et A2c($\theta$) varient en outre en fonction de l'angle $\theta$.

Pour s'affranchir de ces variations, on peut utiliser un capteur 7, 8 comprenant une pluralité d'éléments sensibles alignés et traiter les signaux de sortie tel que décrit dans la demande FR-2 792 403. En effet, on obtient ainsi un effet de moyenne des signaux détectés par les éléments sensibles qui permet de diminuer fortement la variation sur un tour des amplitudes A1s($\theta$), A1c($\theta$), A2s($\theta$) et A2c($\theta$).

Après égalisation des amplitudes, on forme à l'aide du dispositif de traitement 9 le signal :

$$F(S1, C1, S2, C2) = ((C1*S2) - (S1*C2)) / ((C1*C2) + (S1*S2))$$

En développant le calcul et en simplifiant par les amplitudes qui sont égales, on obtient :

$$F(S1, C1, S2, C2) = \tan(\delta).$$

Le signal de sortie, qui est la tangente de l'angle de torsion de la barre 1, permet donc une mesure directe du couple appliqué sur l'arbre.

De plus, le signal de sortie étant indépendant de l'amplitude des signaux d'entrée, la mesure de couple obtenue est insensible aux variations d'entrefer ou à la décroissance du champ magnétique due à la température.

En outre, la mesure de couple étant effectuée par traitement spatial des signaux, le dispositif est capable de délivrer la valeur du couple même lorsque l'arbre n'est pas en rotation.

Par ailleurs, la fonction tangente pouvant être approximée à une droite pour des angles de déformation faibles, il est possible de dimensionner la barre de torsion 1 de sorte que le signal de sortie soit sensiblement linéaire en fonction du couple appliqué.

Suivant une autre réalisation, et notamment dans une application de type direction assistée variable, la barre de torsion 1 peut être dimensionnée pour que le signal de sortie sorte de cette zone linéaire afin que, à l'arrêt du véhicule, la direction assistée électrique fournisse un couple plus important pour un couple appliqué par le conducteur sensiblement plus fort.

Dans un exemple particulier, les moyens générateurs d'impulsions magnétiques 5, 6 peuvent être indexés lors de l'aimantation et lors du montage du dispositif.

En effet, la qualité de magnétisation des codeurs 5, 6 peut être telle que les longueurs de période varient tout au long des codeurs 5, 6 dû notamment à un défaut de centrage de la tête d'aimantation.

Un moyen de s'affranchir de ces défauts consiste à indexer les codeurs 5, 6 tant à l'aimantation qu'au montage afin que les défauts soit en phase et qu'ils ne viennent donc plus influer sur la qualité du signal de sortie.

Dans un deuxième mode de traitement, le dispositif 9 permet d'une part de mettre en phase ces défauts de manière électronique et d'autre part d'obtenir électroniquement un signal de sortie nul sous couple nul.

En effet, une indexation mécanique des codeurs 5, 6 permet, dans la plupart des cas, de ne résoudre que partiellement le problème de réglage du zéro du dispositif 9.

Une solution simple pour résoudre ce problème est, après un positionnement mécanique grossier des capteurs 7, 8 face aux codeurs 5, 6, d'utiliser les signaux :

$S'1 = S1 + GC1$ et $C'1 = GS1 + C1$ dans lequel G est un gain programmable in situ.

De façon équivalente, et qui ne sera pas décrite plus avant ici, on peut utiliser les signaux $S'2 = S2 + GC2$ et $C'2 = GS2 + C2$.

Les signaux $S'1$ et $C'1$ sont déphasés par rapport aux signaux S1 et C1 d'un angle $\phi$ qui est fonction du gain G puisque $\tan(\phi) = - G$.

Ainsi, par programmation in situ du gain G, il est possible de modifier l'angle $\phi$ de sorte à annuler la fonction $F(S'1, C'1, S2, C2)$ sous couple nul.

Après implantation du dispositif et avant son utilisation, il est donc possible de programmer le gain G de sorte à obtenir un signal $F(S'1, C'1, S2, C2)$ qui soit d'une part nul sous couple nul et d'autre part fonction de couple appliqué comme exposé dans le cadre du premier mode de réalisation.

En utilisant un déphasage électronique, cette réalisation permet d'éviter un positionnement mécanique précis des capteurs 7, 8 devant les codeurs 5, 6.

Dans les deux modes de traitement présentés ci-dessus, celui-ci peut être réalisé soit de façon analogique en utilisant des opérateurs électroniques soit de façon numérique en utilisant un convertisseur analogique / numérique des signaux et un microprocesseur.

En relation avec la figure 2, on décrit ci-dessous un mode de réalisation d'une colonne de direction 2 comprenant un dispositif de mesure tel que décrit ci-dessus.

Le corps d'épreuve 1, réalisé sous la forme d'une pièce cylindrique présentant une zone de diamètre amoindri 10, est associé à deux parties de la colonne 11.

En variante, le corps d'épreuve 1 peut être intégré à la colonne 2 sous la forme d'une zone de diamètre amoindri venue de matière avec elle.

La colonne de direction 2 est associée d'une part à un volant de direction et d'autre part à un boîtier de direction, par exemple une crémaillère, transformant le mouvement circulaire du volant de direction en déplacement angulaire de la bielle pendante qui provoque le braquage des roues.

Une première pièce annulaire 12 portant sur une surface axiale 13 le premier codeur 5 est associé à la colonne de direction 1 au voisinage d'une première extrémité 3 du corps d'épreuve 1.

L'association de la première pièce 12 sur la colonne 2 est réalisée à l'aide d'un premier support annulaire 14 emmanché sur ladite colonne 2.

Une deuxième pièce annulaire 15 portant, sur une surface axiale 16 opposée au premier codeur 5, le deuxième codeur 6 est associé sur la colonne de direction 2 au voisinage d'une deuxième extrémité 4 du corps d'épreuve 1.

L'association de la deuxième pièce 15 sur la colonne 2 est réalisée à l'aide d'un deuxième support annulaire 17, de forme complémentaire au premier 14, qui est emmanché sur ladite colonne 2.

Le positionnement de la deuxième pièce 15 par rapport à la première 12 est réalisé par mise en appui de la deuxième pièce 15 sur une rondelle 18 disposée dans un logement 19 prévu dans la première pièce 12, ladite rondelle 18 étant sensiblement dans le même plan axial que la surface 13 portant le premier codeur 5.

La deuxième pièce 15 comprend un logement axial taraudé 20 destiné à recevoir une vis qui, en coopérant avec une bague de serrage 21, permet d'une part de rendre la deuxième pièce 15 solidaire en rotation de la colonne 2 et d'autre part de bloquer axialement l'ensemble formé des deux pièces 12, 15 portant les codeurs 5, 6.

Pour des raisons de compacité, la forme des deux supports 14, 17 est prévue avec des décrochements axiaux de sorte que les deux codeurs 5, 6 soient sensiblement dans le même plan axial et proches axialement l'un de l'autre.

En variante (non représentée), les deux codeurs 5, 6 peuvent être associés respectivement à une extrémité du corps d'épreuve 1.

La colonne 2 est disposée de sorte à pouvoir tourner dans une gaine fixe 22, par exemple formée d'un tube creux. Les capteurs 7, 8 sont associés à cette gaine, par exemple par clipsage d'un support 23 les portant, à distance d'entrefer respectivement d'un codeur 5, 6 de sorte à pouvoir détecter axialement le champ délivré.

Le dispositif de traitement 9 est prévu à distance de la gaine 22, par exemple au niveau d'un calculateur central du véhicule, pour délivrer un signal proportionnel au couple appliqué.

Lorsqu'un couple est appliqué sur la colonne de direction 2 par l'intermédiaire du volant, celle-ci le transmet au boîtier de direction en tournant d'un certain angle.

Le corps d'épreuve 1, notamment par sa géométrie et/ou par la nature du matériau qui le compose, est agencé pour transmettre le mouvement de rotation en subissant une torsion élastique sous l'action de ce couple.

De cette torsion, il résulte que les extrémités 3, 4 du corps d'épreuve 1, et donc les moyens qui leur sont associées, se déplacent en rotation conjointement avec la colonne mais avec un décalage angulaire de l'un par rapport à l'autre, ledit décalage croissant de façon proportionnelle avec l'intensité du couple.

La géométrie et/ou la nature du matériau composant le corps d'épreuve 1 sont prévues pour que, sur toute la zone d'utilisation normale de la colonne de direction 2, d'une part la torsion ne dépasse pas la limite élastique du matériau et d'autre part le décalage angulaire soit détectable par le dispositif de traitement 9 utilisé.

Les capteurs 7, 8, en mesurant la position angulaire de chacun des codeurs 5, 6, permettent d'obtenir la valeur du couple comme exposé ci-dessus.

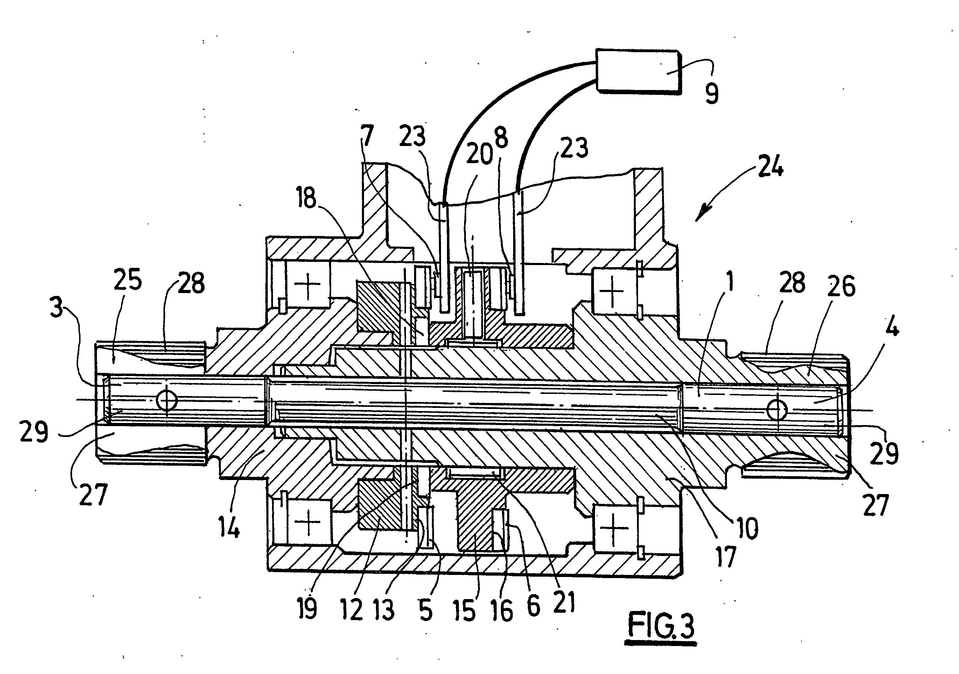

La figure 3 représente un module de mesure du couple de torsion 24 appliqué à un arbre tournant, ledit module 24 comprenant un dispositif de mesure de couple tel que décrit ci-dessus.

Le module 24 est destiné à être inséré, éventuellement de façon amovible, entre deux parties d'un ensemble sur lequel est appliqué le couple à mesurer.

A cet effet, le module 24, dont la structure générale identique à celle de la colonne 2 décrite précédemment ne sera pas détaillée, comprend en outre des moyens d'association 25, 26 dudit module 24 avec cet ensemble.

Selon une première variante, le module 24 est destiné à être intégré entre deux parties d'une colonne de direction 2, ladite colonne 2 étant dépourvue de corps d'épreuve 1.

Selon une deuxième variante, le module 24 est destiné à être intégré entre une colonne de direction 2 et un volant de direction, ladite colonne 2 étant dépourvue de corps d'épreuve 1.

Les moyens d'association 25, 26 représentés sur la figure 3, au nombre de deux, sont formés chacun d'une pièce annulaire 27 dont la surface 28 est cannelée, lesdites pièces 27 s'étendant respectivement de part et d'autre du module 24. Par exemple (voir figure 3), chaque pièce 27 est prévue sur une extrémité d'une pièce cylindrique 29 de diamètre sensiblement identique à celui de la colonne 2 et dont l'autre extrémité est venue de matière avec le corps d'épreuve 1. Suivant cette réalisation, l'ensemble formé du corps d'épreuve 1 et des moyens d'association 25, 26 est monobloc.

La partie de colonne 2 et/ou l'organe appliquant le couple peuvent être rendus solidaires respectivement de ces deux pièces annulaires cannelées 27, notamment par emmanchement à force, de sorte que l'ensemble ainsi formé soit apte d'une part à transmettre le couple et d'autre part à le mesurer.

Un tel module 24 présente l'avantage d'être compact et de former un ensemble indépendant qui peut être associé, éventuellement de façon amovible, à un ensemble sur lequel un couple devant être transmis et mesuré est appliqué.

## Revendications

1. Dispositif de mesure du couple de torsion appliqué à un arbre tournant, notamment à une colonne de direction (2) d'un véhicule, ledit dispositif comprenant un corps d'épreuve (1) déformable en torsion sous l'action du couple appliqué sur ledit arbre ainsi qu'un premier et un deuxième moyen générateur d'impulsions magnétiques (5, 6), dans lequel :

   - le premier moyen (5) est associé au corps d'épreuve (1) au voisinage d'une première extrémité (3) de celui-ci ;
   - le deuxième moyen (6) est associé au corps d'épreuve (1) au voisinage d'une deuxième extrémité (4) de celui-ci ;
   - un premier capteur magnétique analogique (7) fixe par rapport à l'arbre tournant est disposé en regard et à distance d'entrefer du premier moyen (5), ledit capteur (7) étant apte à délivrer un signal analogique S1 et un signal analogique C1 en quadrature ;
   - un deuxième capteur magnétique analogique (8) fixe par rapport à l'arbre tournant est disposé en regard et à distance d'entrefer du deuxième moyen (6), ledit capteur (8) étant apte à délivrer un signal analogique S2 et un signal analogique C2 en quadrature ;

ledit dispositif étant **caractérisé en ce qu'**il comprend en outre :

- un dispositif électronique de traitement (9) apte, à partir de signaux analogiques d'entrée A, B, C, D qui sont fonctions des signaux S1, C1, S2 et C2, à former le signal de sortie F(A, B, C, D) = ((B*C) - (A*D)) / ((B*D) + (A*C)) qui est fonction du couple exercé sur ledit arbre.

**2.** Dispositif selon la revendication 1, **caractérisé en ce que** les signaux A, B, C et D sont respectivement égaux aux signaux S1, C1, S2 et C2.

**3.** Dispositif selon la revendication 1, **caractérisé en ce que** le dispositif électronique de traitement (9) comprend en outre des moyens d'application d'un gain réglable G sur les signaux S1 et C1 ou S2 et C2 et des moyens de formation des signaux S'N = SN + GCN et C'N = GSN + CN, avec N =1 ou 2, les signaux A, B, C et D étant respectivement égaux aux signaux S'1, C'1, S2 et C2 ou aux signaux S1, C1, S'2 et C'2.

**4.** Dispositif selon l'une quelconque des revendications 1 à 3, **caractérisé en ce que** le dispositif de traitement (9) comprend des opérateurs électroniques aptes à délivrer les signaux de sortie.

**5.** Dispositif selon l'une quelconque des revendications 1 à 3, **caractérisé en ce que** le dispositif de traitement (9) comprend un convertisseur analogique / numérique des signaux et un microprocesseur apte à délivrer les signaux de sortie.

**6.** Dispositif selon l'une quelconque des revendications 1 à 5, **caractérisé en ce que** les capteurs magnétiques (7, 8) comprennent au moins deux éléments sensibles choisis parmi les sondes à effet Hall, les magnétorésistances, les magnétorésistances géantes.

**7.** Dispositif selon la revendication 6, **caractérisé en ce que** les capteurs magnétiques (7, 8) comprennent une pluralité d'éléments sensibles alignés.

**8.** Dispositif selon l'une quelconque des revendications 1 à 7, **caractérisé en ce que** les moyens générateurs d'impulsions (5, 6) sont formés respectivement d'un anneau multipolaire en matériau synthétique chargé de particules de ferrite formé d'une pluralité de domaines contigus à direction d'aimantation inversée d'un domaine donné par rapport aux deux domaines qui lui sont contigus.

**9.** Dispositif selon l'une quelconque des revendications 1 à 8, **caractérisé en ce qu'**il délivre en outre la position angulaire de l'arbre tournant.

**10.** Procédé pour mesurer le couple au moyen d'un dispositif de mesure selon l'une quelconque des revendications 2 à 9, **caractérisé en ce qu'**il comprend les étapes de :

- mesure des signaux analogiques S1, C1, S2 et C2 ;
- égalisation de l'amplitude des signaux S1, C1 et de celle des signaux S2, C2;
- formation du signal F(S1, C1, S2, C2).

**11.** Procédé pour mesurer le couple au moyen d'un dispositif de mesure selon l'une quelconque des revendications 3 à 9, **caractérisé en ce qu'**il comprend les étapes de :

- mesure des signaux analogiques S1, C1, S2 et C2 ;
- égalisation de l'amplitude des signaux S1, C1 et de celle des signaux S2, C2;
- application d'un gain G sur les signaux S1 et C1 ou S2 et C2
- formation des signaux S'N = SN + GCN et C'N = GSN + CN, avec N=1 ou 2 ;
- formation du signal de sortie F(S'1, C'1, S1, S2) ou F(S1, C1, S'2, C'2).

**12.** Procédé selon la revendication 11, **caractérisé en ce qu'**il comprend une étape préalable de détermination de la valeur du gain G de sorte que le signal de sortie soit nul sous couple nul.

**13.** Procédé selon l'une quelconque des revendications 10 à 12, **caractérisé en ce que** l'égalisation de l'amplitude des signaux est réalisée par programmation in situ de type EEPROM, ZENER ZAPPING ou équivalent.

**14.** Colonne de direction (2) comprenant un dispositif de mesure de couple de torsion selon l'une quelconque des revendications 1 à 9, **caractérisée en ce que** le corps d'épreuve (1) est intégré à la colonne (2).

**15.** Module de mesure du couple de torsion (24) appliqué à un arbre tournant, ledit module (24) comprenant un dispositif selon l'une quelconque des revendications 1 à 9 et des moyens d'association (25, 26) dudit module (24) avec respectivement deux parties de l'arbre, ledit arbre étant dépourvu de corps d'épreuve (1).

**16.** Module de mesure du couple de torsion (24) appliqué à un arbre tournant, ledit module (24) comprenant un dispositif selon l'une quelconque des revendications 1 à 9 et des moyens d'association (25, 26) dudit module (24) avec respectivement une extrémité de l'arbre et l'organe appliquant le couple, ledit arbre étant dépourvu de corps d'épreuve (1).

**Claims**

**1.** Device for measuring the torsion torque applied to a rotating shaft, in particular a steering column (2) of a vehicle, said device comprising a test body (1) which can be deformed by torsion under the action of the torque applied to said shaft, as well as first and second means for generating magnetic pulses (5, 6), wherein:

- the first means (5) are connected with the test body (1) in the vicinity of a first end (3) thereof;
- the second means (6) are connected with the test body (1) in the vicinity of a second end (4) thereof;
- a first analogue magnetic sensor (7) fixed in relation to the rotating shaft is arranged opposite to and at air gap distance from the first means (5), said sensor (7) being capable of emitting an analogue signal S1 and an analogue signal C1 in quadrature;
- a second analogue magnetic sensor (8) fixed in relation to the rotating shaft is arranged opposite to and at air gap distance from the second means (6), said sensor (8) being capable of emitting a analogue signal S2 and an analogue signal C2 in quadrature;

said device being **characterised in that** it also comprises:

- an electronic processing device (9) capable, using analogue input signals A, B, C, D which are functions of the signals S1, C1, S2 and C2, of forming the output signal $F(A, B, C, D) = ((B*C) - (A*D)) / ((B*D) + (A*C))$ which is a function of the torque applied to said shaft.

**2.** Device according to claim 1, **characterised in that** the signals A, B, C and D are respectively equal to the signals S1, C1, S2 and C2.

**3.** Device according to claim 1, **characterised in that** the electronic processing device (9) also comprises means for applying an adjustable gain G to the signals S1 and C1 or S2 and C2 and means for forming the signals S'N = SN + GCN and C'N = GSN + CN, where N = 1 or 2, the signals A, B, C and D being respectively equal to the signals S'1, C'1, S2 and C2 or to the signals S1, C1, S'2 and C'2.

**4.** Device according to any one of the claims from 1 to 3, **characterised in that** the processing device (9) comprises electronic operators capable of emitting the output signals.

**5.** Device according to any one of the claims from 1 to 3, **characterised in that** the processing device (9) comprises an analogue-to-digital converter for the signals and a microprocessor capable of emitting the output signals.

**6.** Device according to any one of the claims from 1 to 5, **characterised in that** the magnetic sensors (7, 8) comprise at least two sensitive elements chosen from Hall-effect probes, magnetoresistances, giant magnetoresistances.

**7.** Device according to claim 6, **characterised in that** the magnetic sensors (7, 8) comprise a plurality of aligned sensitive elements.

**8.** Device according to any one of the claims from 1 to 7, **characterised in that** the pulse-generating means (5, 6) are respectively made up of a multipolar ring made from a synthetic material charged with particles of ferrite formed by a plurality of contiguous domains with reversible direction of magnetisation of one given domain in relation to the two domains which are contiguous with it.

9. Device according to any one of the claims from 1 to 8, **characterised in that** it also emits the angular position of the rotating shaft.

10. Method of measuring the torque by means of a measurement device according to any one of the claims from 2 to 9, **characterised in that** it comprises the steps of:

   - measuring the analogue signals S1, C1, S2 and C2;
   - equalising the amplitude of the signals S1, C1 and that of the signals S2, C2;
   - forming the signal F(S1, C1, S2, C2).

11. Method of measuring the torque by means of a measurement device according to any one of the claims from 3 to 9, **characterised in that** it comprises the steps of:

   - measuring the analogue signals S1, C1, S2 and C2;
   - equalising the amplitude of the signals S1, C1 and that of the signals S2, C2;
   - applying a gain G to the signals S1 and C1 or S2 and C2;
   - forming the signals S'N = SN + GCN and C'N = GSN + CN, where N = 1 or 2;
   - forming the output signal F(S'1, C'1, S2, C2) or F(S1, C1, S'2, C'2).

12. Method according to claim 11, **characterised in that** it comprises a prior step of determining the value of the gain G so that the output signal is zero with zero torque.

13. Method according to any one of the claims from 10 to 12, **characterised in that** the equalisation of the amplitude of the signals is carried out by *in situ* programming of the EEPROM, ZENER ZAPPING type, or an equivalent.

14. Steering column (2) comprising a device for measuring the torsion torque according to any one of the claims from 1 to 9, **characterised in that** the test body (1) is integrated in the column (2).

15. Module for measuring the torsion torque (24) applied to a rotating shaft, said module (24) comprising a device according to any one of the claims from 1 to 9 and means of connecting (25, 26) said module (24) respectively with two parts of the shaft, said shaft lacking a test body (1).

16. Module for measuring the torsion torque (24) applied to a rotating shaft, said module (24) comprising a device according to any one of the claims from 1 to 9 and means of connecting (25, 26) said module (24) respectively with one end of the shaft and the device applying the torque, said shaft lacking a test body (1).

**Patentansprüche**

1. Vorrichtung für das Messen des auf eine Drehwelle angewandten Drillmoments, insbesondere auf eine Lenksäule (2) eines Fahrzeugs, wobei die besagte Vorrichtung einen Versuchskörper (1) umfaßt, der in Drillung unter der Wirkung des auf die besagte Welle angewandten Moments verformbar ist, sowie ein erstes und ein zweites Mittel zum Erzeugen von Magnetimpulsen (5, 6), in dem:

   - Das erste Mittel (5) mit dem Versuchskörper (1) in der Nähe eines ersten Endes (3) davon verbunden ist;
   - Das zweite Mittel (6) mit dem Versuchskörper (1) in der Nähe eines zweiten Endes (4) davon verbunden ist;
   - Ein erster im Verhältnis zur Drehwelle feststehender analoger Magnetfühler (7) gegenüber und in Entfernung des Luftspalts vom ersten Mittel (5) entfernt ist, wobei der besagte Fühler (7) geeignet ist, ein analoges Signal S1 und ein phasenverschobenes analoges Signal C1 abzugeben;
   - Ein zweiter im Verhältnis zur Drehwelle feststehender analoger Magnetfühler (8) gegenüber und in Entfernung des Luftspalts vom zweiten Mittel (6) entfernt ist, wobei der besagte Fühler (8) geeignet ist, ein analoges Signal S2 und ein phasenverschobenes analoges Signal C2 abzugeben;

   Wobei die besagte Vorrichtung **dadurch gekennzeichnet ist, daß** sie ferner umfaßt:

- Eine elektronische Verarbeitungsvorrichtung (9), die geeignet ist, ausgehend von analogen Eingangssignalen A, B, C, D, die von den Signalen S1, C1, S2 und C2 abhängen, das Ausgangssignal $F(A, B, C, D) = ((B*C) - (A*D)) / ((B*D) + (A*C))$ zu bilden, das vom auf die besagte Welle ausgeübten Moment abhängt.

2. Vorrichtung nach Anspruch 1, **dadurch gekennzeichnet, daß** die Signale A, B, C und D gleich den Signalen S1 beziehungsweise C1, S2 und C2 sind.

3. Vorrichtung nach Anspruch 1, **dadurch gekennzeichnet, daß** die elektronische Verarbeitungsvorrichtung (9) ferner Mittel zur Anwendung einer verstellbaren Verstärkung G auf die Signale S1 und C1 oder S2 und C2 umfaßt und Mittel zur Bildung der Signale S'N = SN + GCN und C'N = GSN + CN, mit N = 1 oder 2, wobei die Signale A, B, C und D gleich den Signalen S'1 beziehungsweise C'1, S2 und C2 oder den Signalen S1, C1, S'2 und C'2 sind.

4. Vorrichtung nach einem beliebigen der vorstehenden Ansprüche 1 bis 3, **dadurch gekennzeichnet, daß** die Verarbeitungsvorrichtung (9) elektronische Operatoren umfaßt, die geeignet sind, die Ausgangssignale abzugeben.

5. Vorrichtung nach einem beliebigen der vorstehenden Ansprüche 1 bis 3, **dadurch gekennzeichnet, daß** die Verarbeitungsvorrichtung (9) einen Analog-/Digital-Wandler der Signale und einen Mikroprozessor umfaßt, der geeignet ist, die Ausgangssignale abzugeben.

6. Vorrichtung nach einem beliebigen der vorstehenden Ansprüche 1 bis 5, **dadurch gekennzeichnet, daß** die Magnetfühler (7, 8) zumindest zwei empfindliche Elemente umfassen, die unter den Hallsonden, den Feldplatten, den Riesenfeldplatten gewählt wurden.

7. Vorrichtung nach Anspruch 6, **dadurch gekennzeichnet, daß** die Magnetfühler (7, 8) eine Vielzahl ausgefluchteter empfindlicher Elemente umfassen.

8. Vorrichtung nach einem beliebigen der vorstehenden Ansprüche 1 bis 7, **dadurch gekennzeichnet, daß** die Mittel zum Erzeugen von Magnetimpulsen (5, 6) jeweils aus einem vielpoligen Ring aus einem mit Ferritpartikeln geladenen Synthetikmaterial gebildet werden, das aus einer Vielzahl von anschließenden Bereichen mit umgekehrter Magnetisierungsrichtung eines gegebenen Bereichs gegenüber den beiden Bereichen gebildet werden, die daran anschließen.

9. Vorrichtung nach einem beliebigen der vorstehenden Ansprüche 1 bis 8, **dadurch gekennzeichnet, daß** sie ferner die Winkelposition der Drehwelle angibt.

10. Verfahren für das Messen des Drehmoments vermittels einer Vorrichtung für das Messen nach einem beliebigen der vorstehenden Ansprüche 2 bis 9, **dadurch gekennzeichnet, daß** es folgende Schritte umfaßt:

    - Messung der analogen Signale S1, C1, S2 und C2;
    - Ausgleich der Amplitude der Signale S1, C1 und derjenigen der Signale S2, C2;
    - Bildung des Signals F(S1, C1, S2, C2).

11. Verfahren für das Messen des Drehmoments vermittels einer Vorrichtung für das Messen nach einem beliebigen der vorstehenden Ansprüche 3 bis 9, **dadurch gekennzeichnet, daß** es folgende Schritte umfaßt:

    - Messung der analogen Signale S1, C1, S2 und C2;
    - Ausgleich der Amplitude der Signale S1, C1 und derjenigen der Signale S2, C2;
    - Anwendung einer Verstärkung G auf die Signale S1 und C1 oder S2 und C2;
    - Bildung der Signale S'N = SN + GCN und C'N = GSN + CN mit N = 1 oder 2;
    - Bildung des Ausgangssignals F(S'1, C'1, S1, S2) oder F(S1, C1, S'2, C'2);

12. Verfahren nach Anspruch 11, **dadurch gekennzeichnet, daß** es einen Schritt zur vorherigen Bestimmung des Werts der Verstärkung G umfaßt, so daß das Ausgangssignal null bei Drehmoment null ist;

13. Verfahren nach einem beliebigen der vorstehenden Ansprüche 10 bis 12, **dadurch gekennzeichnet, daß** der Ausgleich der Amplitude der Signale durch Programmierung vor Ort von der Art EEPROM, ZENER ZAPPING oder gleichwertig realisiert wird;

**14.** Lenksäule (2), die eine Vorrichtung für das Messen des Drillmoments nach einem beliebigen der vorstehenden Ansprüche 1 bis 9 umfaßt, **dadurch gekennzeichnet, daß** der Versuchskörper (1) in die Lenksäule (2) eingebunden ist.

**15.** Modul für das Messen des auf eine Drehwelle angewandten Drillmoments (24), wobei das besagte Modul (24) eine Vorrichtung nach einem beliebigen der vorstehenden Ansprüche 1 bis 9 umfaßt und Mittel zur Verbindung (25, 26) des besagten Moduls (24) mit jeweils zwei Teilen der Welle, wobei die besagte Welle keinen Versuchskörper (1) hat.

**16.** Modul für das Messen des auf eine Drehwelle angewandten Drillmoments (24), wobei das besagte Modul (24) eine Vorrichtung nach einem beliebigen der vorstehenden Ansprüche 1 bis 9 umfaßt und Mittel zur Verbindung (25, 26) des besagten Moduls (24) mit jeweils einem Ende der Welle und dem Organ, das das Drehmoment anwendet, wobei die besagte Welle keinen Versuchskörper (1) hat.

## FIG.1

FIG.2

EP 1 239 274 B1

FIG.3

EP 1 239 274 B1

**EP 1 239 274 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 0284508 A
- FR 2599794
- FR 2792403
- FR 2769087
- FR 2754063 A